# EUROPÄISCHE PATENTSCHRIFT

(11) **EP 1 648 116 B1**
(45) Veröffentlichungstag und Bekanntmachung des Hinweises auf die Patenterteilung: **19.09.2007**
(21) Anmeldenummer: 05022087.0
(22) Anmeldetag: 11.10.2005
(51) Int. Cl.: H04L 12/423

(54) **Verfahren zur Übertragung von Daten in einem Kommunikationssystem**
Method for data transmission in a communication system
Procédé de transmission de données dans un système de communication

(30) Priorität: 15.10.2004 DE 102004050424
(43) Veröffentlichungstag der Anmeldung: 19.04.2006
(73) Patentinhaber: Bosch Rexroth AG, 70184 Stuttgart (DE)
(72) Erfinder: Kynast, Rigobert, 97816 Lohr am Main (DE); Leurs, Ludwig, Dr., 97816 Lohr am Main (DE); Schmid, Thomas, 97840 Hafenlohr (DE); Schultze, Stephan, Dr., 97816 Lohr am Main (DE)

(56) Entgegenhaltungen:
- WO-A-00/19666
- US-A- 5 278 848
- KENNEL R ET AL: "DATENKOMMUNIKATION UEBER DAS BUSSYSTEM SERCOS INTERFACE" AUTOMATISIERUNGSTECHNISCHE PRAXIS - ATP, OLDENBOURG INDUSTRIEVERLAG, MUNCHEN, DE, Bd. 33, Nr. 7, 1. Juli 1991 (1991-07-01), Seiten 363-368, XP000243095 ISSN: 0178-2320

## Beschreibung

Die vorliegende Erfindung betrifft ein Verfahren zur Übertragung von Daten in einem Kommunikationssystem, welches einen Zentralteilnehmer und wenigstens einen weiteren Teilnehmer aufweist, wobei von dem wenigstens einen weiteren Teilnehmer zu dem Zentralteilnehmer Daten mittels Telegrammen übertragen werden, wobei die Telegramme vor der Aussendung durch den wenigstens einen weiteren Teilnehmer vom Zentralteilnehmer an den wenigstens einen weiteren Teilnehmer übertragen wurden. Ferner betrifft die vorliegende Erfindung ein Kommunikationssystem sowie ein entsprechendes Automatisierungssystem.

Im Hinblick auf die Offenbarung der vorliegenden Anmeldung wird auf die von der Anmelderin mit der vorliegenden Patentanmeldung gleichzeitig eingereichten weiteren deutschen Patentanmeldungen mit den Bezeichnungen "Verfahren zur Synchronisation in einem redundanten Kommunikationssystem" und "Kommunikationssystem und Verfahren zur Synchronisation desselben" hingewiesen.

Im Stand der Technik sind Kommunikationssysteme bekannt. Insbesondere verteilte Kommunikationssysteme sind in vielen technischen Anwendungen anzutreffen. So werden verteilte Kommunikationssysteme beispielsweise in Automatisierungssystemen mit dezentraler Steuerungs- und Antriebstechnik eingesetzt, in denen oftmals eine Vielzahl von Einzelsystemen zeitlich synchron gesteuert und angetrieben werden. Ein solches Einzelsystem kann eine Antriebseinheit, beispielsweise einen Synchron- und Asynchronmotor, sein, mit welcher eine von mehreren, zueinander interpolierenden oder eng miteinander gekoppelt arbeitenden Achsen angetrieben wird. Typische Anwendungsgebiete solcher Automatisierungssysteme mit dezentraler Steuerungs- und Antriebstechnik sind Druck- oder auch Werkzeugmaschinen sowie auch Robotersysteme mit einer Vielzahl von zeitlich zueinander abgestimmt arbeitenden Förder- und Wirkelementen.

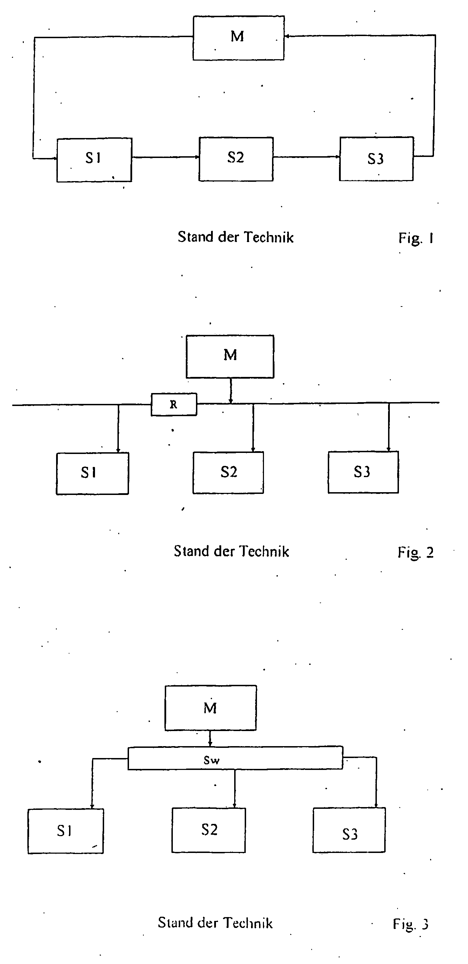

Derartige Kommunikationssysteme umfassen wenigstens zwei, in der Regel jedoch weitaus mehr Teilnehmer, die vorzugsweise hierarchisch mit einem als Zentralteilnehmer ausgebildeten Teilnehmer und den übrigen Teilnehmern als weiteren Teilnehmern des Kommunikationssystems ausgebildet bzw. angeordnet sind. Eine solche hierarchische Anordnungsstruktur ist beispielsweise als Master-Slave-Struktur mit dem Zentralteil- oder Hauptteilnehmer als "Master" oder "Master-Teilnehmer" (Hauptstation) und den weiteren Teilnehmern als "Slaves" oder "Slave-Teilnehmer" (Unter- oder Nebenstationen) bekannt. Der Zentralteilnehmer ist als zentraler Teilnehmer ausgebildet, der Steuersignale an die weiteren Teilnehmer generiert und versendet. Die weiteren Teilnehmer stehen zum Empfang dieser Steuerungssignale und zur bedarfsweisen weiteren Kommunikation mit dem Zentralteilnehmer sowie üblicherweise auch mit den anderen weiteren Teilnehmern in Kommunikationsverbindung. Die Slave-Teilnehmer beziehen sich dabei zumeist auf Prozessankopplungen, wie z.B. Sensoren und Aktoren, d.h. Ein/Ausgabebaugruppen für analoge und digitale Signale, sowie Antriebe. Die Dezentralisierung der Signalverarbeitung mit Datenvorverarbeitung bei den Slave-Teilnehmern ist erforderlich, um die Anzahl der übertragenden Daten gering zu halten und erfordert die Kommunikation zwischen dem Master-Teilnehmer und den weiteren Slave-Teilnehmern. Aus dem Stand der Technik sind hierzu im Wesentlichen die in den Fig. 1 bis 3 dargestellten drei Grundanordnungsstrukturen ("Topologien") bekannt. In Fig. 1 sind der Zentralteilnehmer M und die weiteren Teilnehmer S1, S2, S3 in einer Ringstruktur miteinander verbunden. Ein von dem Zentralteilnehmer M generiertes Signal durchläuft die Ringstruktur und passiert somit die einzelnen weiteren Teilnehmer S1, S2 und S3 in serieller Reihenfolge. Fig. 2 zeigt eine Busstruktur mit einer zentralen Busleitung an die sowohl der Zentralteilnehmer M als auch die weiteren Teilnehmer S1, S2 und S3 angeschlossen sind. Der Signal- und Datentransfer wird in bekannter Weise über einen Datenbus bewerkstelligt. Bei längeren Wegstrecken der zentralen Busleitung ist es üblich, zur Verstärkung des Signals einen "Repeater" R in die zentrale Busleitung zwischen zu schalten. Die dritte in Fig. 3 dargestellte Struktur ist eine Sternstruktur mit einem in die Verbindungsleitung integrierten, zentralen Schaltungselement Sw ("Switch"). Ein von dem Zentralteilnehmer M generiertes Signal wird mittels des Schaltungselements Sw dem als Adressaten spezifizierten Teilnehmer S1 oder S2 oder S3 zugestellt.

Die in den Fig. 1 bis 3 dargestellten Strukturen können auch Teil eines komplexeren Systems sein, in welchem mehrere Grundanordnungsstrukturen miteinander verflochten realisiert sind. Die Generierung eines übergeordneten Steuerungssignals obliegt dann einem der Zentralteilnehmer oder auch einem übergeordnetem Zentralteilnehmer.

Ferner sind aus dem Stand der Technik auch verteilte Kommunikationssysteme bekannt, bei denen die Masterfunktion zwischen mehreren Teilnehmern oder sogar zwischen allen Teilnehmern wechseln kann. Solche "Multi-Master"-Systeme bedingen, dass mehrere Teilnehmer die Funktionalität eines zentralen Teilnehmers aufweisen und bei Vorliegen einer definierten Bedingung diese Funktion auch ausüben. Hierbei wird ein zuvor als weiterer Teilnehmer fungierender Teilnehmer Zentralteilnehmer und der bisherige Zentralteilnehmer weiterer Teilnehmer des Kommunikationssystems. Eine mögliche Bedingung für einen solchen Wechsel kann beispielsweise das Ausbleiben eines Kontrollsignals des bisherigen Zentralteilnehmers sein.

Aus der US 5,278,848 ist ein Verfahren zur bidirektionalen Kommunikation bekannt. Dabei werden digitale Signale an eine Nebenstelle geleitet und gelangen sukzessive über weitere Nebenstationen zurück zur Hauptstation. Dabei enthalten die von der Hauptstation übermittelten Datentelegramme Information, die von der Nebenstation überschrieben wird.

Aus der WO 00/19666 ist eine Vorrichtung für die Ablaufplanung einer Vielzahl von Telegrammen in einem Netzwerk bekannt. Dieses Netzwerk weist eine Vielzahl von Knoten auf. Dabei speichert eine Ablaufspeichereinrichtung die Übertragungszeit für jedes Datentelegramm und eine Liste der zu übertragenden Telegramme.

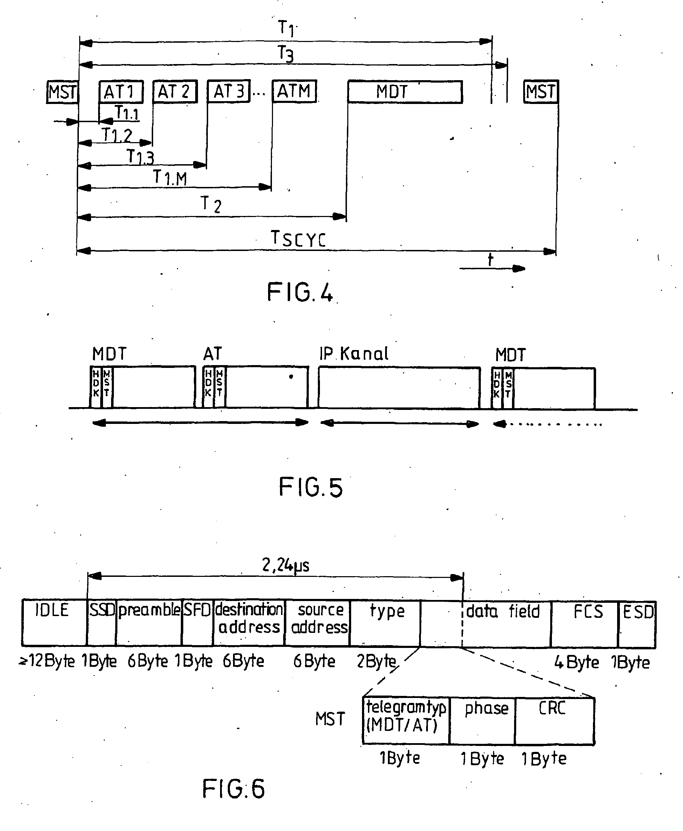

Aktuell ist von der Anmelderin unter der Bezeichnung SERCOS interface® (SErial Real Time COmmunication System) ein derartiges verteiltes Kommunikationssystem mit ringförmiger Struktur auf dem Markt, welches über einen Zentralteilnehmer Steuerungssignale an weitere Teilnehmer generiert und sendet. Die weiteren Teilnehmer sind üblicherweise mittels Lichtwellenleiter mit dem Zentralteilnehmer verbunden. Das SERCOS interface® spezifiziert eine streng hierarchische Kommunikation. Daten werden in Form von Datenblöcken, den sogenannten Telegrammen oder "Frames" in zeitlich konstanten Zyklen zwischen der Steuerung (Master) und den Unterstationen (Slave) ausgetauscht. Unmittelbare Kommunikation zwischen den weiteren Teilnehmern bzw. Unterstationen findet nicht statt. Zusätzlich werden Dateninhalte festgelegt, d.h. Bedeutung, Darstellung und Funktionalität der übertragenen Daten ist in großem Maße vordefiniert. Bei dem SERCOS interface® ist der Master die Anschaltung der Steuerung an den Ring und ein Slave die Anschaltung einer oder mehrerer Unterstationen (Antriebe oder I/O-Stationen). Mehrere Ringe an einer Steuerung sind möglich, wobei die Koordination der einzelnen Ringe zueinander Aufgabe der Steuerung ist und nicht vom SERCOS interface® spezifiziert wird. Bevorzugt wird dieses Kommunikationssystem zur Regelung und Steuerung von verteilt angeordneten Motoren, beispielsweise von Synchron- oder Asynchronmotoren, eingesetzt. Die weiteren Teilnehmer des Kommunikationssystems sind dann die Regelgeräte zur Regelung und Steuerung jeweils eines Motors. Haupteinsatzgebiete dieses Kommunikationssystems sind insbesondere die Antriebe von Werkzeugmaschinen, Druckmaschinen, Wirkmaschinen und Maschinen der allgemeinen Automatisierungstechnik. Bei dem SERCOS interface® gibt es fünf verschiedene Kommunikationsphasen. Die ersten vier Phasen (Phase 0 bis Phase 3) dienen der Initialisierung der Teilnehmer, die fünfte Phase (Phase 4) ist der reguläre Betrieb. Innerhalb eines Kommunikationszyklus tauscht jede Unterstation Daten mit der Steuerung aus. Der Zugriff auf den Ring ist deterministisch innerhalb kollisionsfreier Sendezeitschlitze. In Fig. 4 ist der Kommunikationszyklus des regulären Betriebs, d.h. die Kommunikationsphasen 3 und 4 des SERCOS interface®, schematisch dargestellt. Bei dem SERCOS interface® gibt es drei verschiedene Telegrammarten, nämlich Master-Synchronisationstelegramme, Antriebstelegramme und Master-Datentelegramme. Master-Synchronisationstelegramme (MST) werden vom Master-Teilnehmer ausgesandt und besitzen nur ein kurzes Datenfeld und dienen zur Vorgabe der Kommunikationsphase und als Zeitreferenz. Antriebstelegramme (AT) werden von Slave-Teilnehmern gesendet und weisen beispielsweise Ist-Werte eines durch den jeweiligen Slave-Teilnehmer angesteuerten Antriebs auf. Master-Datentelegramme (MDT) sind Summen(rahmen)telegramme mit Datenfeldern für alle Slave-Teilnehmer. Mittels Master-Datentelegramme werden vom Master an den jeweiligen Slave Soll-Werte übermittelt. Jede Unterstation bekommt während der Initialisierung den Beginn und der Länge ihres (Unter-)Datenfeldes mitgeteilt. Das SERCOS interface® definiert dabei folgende Arten von Daten, nämlich Betriebsdaten, Steuer- bzw. Statusinformationen und nicht zyklisch übertragene Daten. Die Betriebsdaten (Prozessdaten) werden in jedem Zyklus übertragen. Beispiele sind hierfür Soll- und Istwerte. Die Länge des Betriebsdatenbereichs ist parametrisierbar, sie wird bei der Initialisierung festgelegt und bleibt während des Betriebs des Ringes konstant. Die Steuerinformation, welche von den Master-Teilnehmern zu den Slave-Teilnehmern gesendet wird, und die Statusinformation, welche von den Slave-Teilnehmern zu den Master-Teilnehmern gesendet wird, sind beispielsweise Freigabesignale und Bereitschaftsmeldungen. Nicht zyklisch übertragene Daten (Service-Kanal) umfassen Einstellparameter, Diagnosedaten und Warnungen. Außerdem werden Kommandosequenzen über diese nicht zyklische Übertragung gesteuert. Der schematischen Darstellung der Fig. 4 entnimmt man, dass ein Kommunikationszyklus vom Zentralteilnehmer durch Aussendung eines MST gestartet wird. Alle kommunikationsspezifischen Zeiten werden auf das Ende dieses kurzen (ca. 25 µs langen) Telegramms bezogen. Die Unterstationen senden nun nacheinander jeweils in ihren Sendezeitschlitzen, beginnend ab T_{1,i} ihre Antriebstelegramme (ATi). Nach dem letzten AT sendet der Master ab T₂ das MDT. Der nächste Zyklus beginnt wieder mit einem MST. Der Zeitabstand zwischen zwei MSTs wird SERCOS-Zykluszeit T_{SYNC} genannt. Die Kommunikation wird bei dem SERCOS interface® auf das Ende des MST synchronisiert. Dabei wird in vorzugsweisen äquidistanten Zeitschritten von dem Zentralteilnehmer ein Synchronisationstelegramm oder Synchronisationstelegramm generiert und in den Kommunikationsring eingespeist. An den Empfang des Synchronisationstelegramms und des Synchronisationssignals ist in den Regelgeräten üblicherweise über einen Zeitparameter eine Soll-/Istwertverarbeitung angekoppelt, die zu einer Bestimmung und Aufgabe von Steuer- und Regelparametern an die jeweiligen Stellmotoren führt.

Insbesondere wenn die Antriebstelegramm als Summentelegramme (im Unterschied zu der Darstellung gemäß Fig. 4, bei welcher Einzeltelegramme als Antriebstelegramme verwendet werden) ist eine Erkennung eines Teilnehmerausfalls eines der weiteren Teilnehmers schwierig. Dabei können fälschlicherweise als korrekt angenommene Istwertdaten aus einem Antriebstelegramm den ordnungsgemäßen Betrieb des Kommunikationssystems wesentlich beeinträchtigen.

Der Erfindung liegt daher die Aufgabe zugrunde, die Nachteile des Standes der Technik zu vermeiden, und insbesondere das eingangs genannte Verfahren derart weiterzubilden, dass ein Teilnehmerausfall zuverlässig erkannt wird.

Diese Aufgabe wird bei einem Verfahren der eingangs genannten Art dadurch gelöst, dass in den Telegrammen an wenigstens einer dem wenigstens einen weiteren Teilnehmer zugeordneten Stelle vom Zentralteilnehmer ein vorbestimmter Eintrag gesetzt wird, und dass der wenigstens eine weitere Teilnehmer seine an den Zentralteilnehmer zu übertragenden Daten derart in das Telegramm einspeist, dass der vom Zentralteilnehmer gesetzte Eintrag zumindest teilweise überschrieben wird. Erfingdungsgemäß weisen die von dem wenigstens einen Teilnehmer einzuspeisenden Daten ein vorbestimmtes Datum auf und das vorbestimmte Datum ist im vordersten Übertragungswort in dem für den wenigstens einen weiteren Teilnehmer vorgesehenen Datenfeld des Telegramms.

Gemäß der vorliegenden Erfindung wird daher in den (Antriebs-)Telegrammen vom Zentralteilnehmer ein Rücksetzen bzw. Reset in den entsprechenden Telegrammbereichen durchgeführt, so dass auf einfache Weise erkannt werden kann, ob einer der weiteren Teilnehmer Daten in das Telegramm eingespeist hat. Es ergibt sich somit eine einfache Erkennung eines Teilnehmerausfalls, was anzeigt, dass die in den entsprechenden Telegrammbereichen enthaltenen Daten nicht verwertbar bzw. gültig sind. Durch die vorliegende Erfindung kann daher eine Lebenszeichenüberwachung bzw. "Watch Dog" für den weiteren Teilnehmer realisiert werden.

Gemäß einer bevorzugten Ausführungsform der Erfindung speist der wenigstens eine weitere Teilnehmer nach jedem Empfang des vom Zentralteilnehmer an ihn übertragenen Telegramms Daten in das Telegramm ein, welche von dem vorbestimmten Eintrag verschieden sind. Hierdurch wird die Wahrscheinlichkeit der richtigen Erkennung eines Teilnehmerausfalls erhöht.

Das vorbestimmte Datum bzw. eine vordefinierte Bitsequenz ist vorteilhafterweise ein eindeutiges Identifizierungsdatum für den weiteren Teilnehmer, wie beispielsweise ein spezielles Bit an einer vordefinierten Stelle im Telegramm oder die Adresse des weiteren Teilnehmers in dem Kommunikationssystem. Insbesondere durch die Verwendung der Adresse des weiteren Teilnehmers kann auf einfache Weise das korrekte Einspeisen von Daten durch einen weiteren Teilnehmer mit Kommunikationsmonitoren am Zentralteilnehmer überwacht werden.

Gemäß einer bevorzugten Ausführungsform der Erfindung sind die Telegramme Summentelegramme, welche für jeden der weiteren Teilnehmer des Kommunikationssystems vorbestimmte verschiede Telegrammfelder aufweisen. In Verbindung mit der vorliegenden Erfindung ergibt sich bei dieser Ausführungsform eine höhere Protokolleffizienz gegenüber Einzel-Istwerttelegrammen.

Vorteilhafterweise wird zur Auswertung und/oder Bearbeitung eines von einem weiteren Teilnehmer übertragenen Telegramminhalts im Zentralteilnehmer oder in einem anderen weiteren Teilnehmer überprüft, ob der vorbestimmte Eintrag zumindest teilweise überschrieben wurde. Die vorliegende Erfindung ist daher nicht nur für die Kommunikation zwischen den weiteren Teilnehmern und dem Zentralteilnehmer, sondern auch zwischen den weiteren Teilnehmern untereinander anwendbar. Durch die vorherige Überprüfung wird vor Beginn der Auswertung und/oder Bearbeitung festgestellt, ob der betreffende weitere Teilnehmer tatsächlich aktuelle und gültige Daten übertragen hat.

Vorteilhafterweise ist hierbei das vorbestimmte Datum und/oder das Identifizierungsdatum des wenigstens ein weiteren Teilnehmers der vorderste Eintrag bzw. wenigstens ein Bit, vorzugsweise genau ein Bit, im ersten übertragenen Datenwort in dem für den wenigstens einen Teilnehmer vorgesehenen Datenfeld des Telegramms. Hierdurch ergibt sich eine Erhöhung der Bearbeitungsgeschwindigkeit aber auch eine einfachere Implementierung in Hard- und Software insoweit, da unmittelbar nach dem Empfang des vordersten Eintrags bzw des ersten übertragenen Datenwortes beim Zentralteilnehmer (oder evtl. einem anderen weiteren Teilnehmer), welcher in der Regel als erster empfangen wird, bereits die erfindungsgemäße Überprüfung im Hinblick auf einen Teilnehmerausfall durchgeführt werden kann. Dabei kann, falls ein derartiger Teilnehmerausfall erkannt wird, d.h. wenn der vom Zentralteilnehmer eingesetzte Eintrag nicht überschrieben wurde, die weitere Bearbeitung vorzeitig abgebrochen werden.

Ferner ist hierbei bevorzugt, dass der vorderste Eintrag von einer angenommenen CPU als letzter in ein Speicherbereich (z.B. dual ported RAM) einkopiert wird, der von einer angenommenen Kommunikationseinheit wiederum von vorne nach hinten ausgelesen und in das Telegramm eingespeist wird. Diese Ausführungsform erweist sich insbesondere in einem Anwendungsfall als vorteilhaft, in welchem das Einkopieren der Daten in den Speicherbereich von der angenommenen CPU länger dauern kann, als es in dem Kommunikationszyklus in dem hierfür vorgesehenen Zeitschlitz vorgesehen ist. Nur wenn der vorderste Eintrag in das Telegramm tatsächlich in den Speicherbereich einkopiert wurde, kann man sichergehen, dass es dem weiteren Teilnehmer gelungen ist, seine gesamten Daten konsistent in das Telegramm einzuspeisen. Falls nämlich die Einkopierung der Daten aufgrund von Zeitüberschreitung abgebrochen werden musste, kommt die angenommene CPU nicht dazu, den vordersten Eintrag, welcher eine Gültigkeitsanzeige darstellt, zu setzen.

Generell ist hierbei bevorzugt, dass das für den wenigstens einen weiteren Teilnehmer vorgesehene Datenfeld des Telegramms von dem wenigstens einen weiteren Teilnehmer von hinten nach vorne mit Daten gefüllt wird. Auf diese Weise ergibt sich automatisch, dass der vorderste Eintrag, der als erster in das Telegramm eingespeist wird, als letzter einkopiert wird.

In diesem Zusammenhang ist es weiter bevorzugt, dass das Einschreiben der Daten von hinten nach vorne bereits in einer Vorstufe hiervon, d.h. dem Speichern der Daten in dem weiteren Teilnehmer, entsprechend vorbereitet wird. Genauer ist bevorzugt, dass der wenigstens eine weitere Teilnehmer seine an den Zentralteilnehmer zu übertragenden Daten in einen Speicherbereich eingeschrieben hat, wobei der wenigstens eine weitere Teilnehmer als letzten Eintrag in den Speicherbereich das vorbestimmte Datum und/oder das Identifizierungsdatum eingeschrieben hat und die Daten in umgekehrter Reihenfolge zum Einschreiben der Daten in den Speicherbereich aus dem Speicherbereich in das Telegramm eingespeist werden. Durch eine entsprechende Einschreiberoutine kann dieses Verfahren mit einem beliebigen Speicher, z.B. einem RAM-Speicher, durchgeführt werden. Allerdings kann hierfür auch ein spezieller Speicherbaustein verwendet werden, welche eine derartige Reihenfolge inhärent vorgibt, wie z.B. ein LIFO-(Last In First Out) Speicher.

Weitere bevorzugte Ausführungsformen der Erfindung sind in den abhängigen Patentansprüchen offenbart.

Die Erfindung, sowie weitere Merkmale, Ziele, Vorteile und Anwendungsmöglichkeiten derselben, wird bzw. werden nachfolgend anhand einer Beschreibung von bevorzugten Ausführungsbeispielen unter Bezugnahme auf die beigefügten Zeichnungen näher erläutert. In den Zeichnungen bezeichnen dieselben Bezugszeichen dieselben bzw. entsprechende Elemente. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigen:
- Fig. 1: eine schematische Darstellung eines aus dem Stand der Technik bekannten Kommunikationssystems, das in einer Ringstruktur angeordnet ist;
- Fig. 2: eine schematische Darstellung eines aus dem Stand der Technik bekannten Kommunikationssystems, das in einer Busstruktur angeordnet ist;
- Fig. 3: eine schematische Darstellung eines aus dem Stand der Technik bekannten Kommunikationssystems, das in einer Sternstruktur angeordnet ist;
- Fig. 4: eine schematische Darstellung der zur Synchronisation und zum regulären Betrieb vorgesehenen Phasen des Kommunikationszyklus des aus dem Stand der Technik bekannten SERCOS interface®;
- Fig. 5: eine schematische Darstellung der erfindungsgemäß zur Synchronisation und zum regulären Betrieb vorgesehenen Phase des Kommunikationszyklus des erfindungsgemäßen Kommunikationssystems;
- Fig. 6: eine schematische Darstellung der Telegrammstruktur mit eingebetteter Synchronisationsinformation des erfindungsgemäßen Kommunikationssystems;
- Fig. 7: eine schematische Darstellung eines aus dem Stand der Technik bekannten Kommunikationssystems mit einer Doppelring-Topologie;
- Fig. 8a bis 8e: schematische Darstellungen der in dem Kommunikationssystem der Fig. 7 ablaufenden Kommunikation, wobei die Fig. 8a bis 8e jeweils die im Kommunikationssystem übertragenen Telegramme bei den jeweiligen Teilnehmern des Kommunikationssystems zeigen; und
- Fig. 9a bis 9e: schematische Darstellungen entsprechend den Fig. 8a bis 8e, wobei die erfindungsgemäße Vorbesetzung von Telegrammfeldern schematisch angezeigt ist.

In Fig. 5 ist schematisch die Betriebsphase der Kommunikation des erfindungsgemäßen Kommunikationssystems im Fall einer zyklischen Kommunikation dargestellt. Man entnimmt der Fig. 5, dass Datentelegramme zwischen einem Zentralteilnehmer oder Master-Teilnehmer (oder Hauptstation) und wenigstens einem weiteren Teilnehmer (Slave-Teilnehmer oder Unter- bzw. Nebenstationen) ausgetauscht werden. Dabei ist der Zentralteilnehmer die Station, auf die sich die Nebenstationen synchronisieren sollen. Das von dem Zentralteilnehmer beispielsweise entlang eines Rings (vgl. Fig. 1) ausgesandte Datentelegramm ist als MDT (= "Master-Datentelegramm") bezeichnet. Das Datentelegramm der wenigstens einen Nebenstation wird mit AT (= "AntriebsTelegramm") bezeichnet. In Fig. 5 ist lediglich ein Antriebstelegramm gezeigt, was grundsätzlich einem Fall entsprechen kann, in welchem lediglich ein Teilnehmer vorgesehen ist (vgl. Fig. 4). Allerdings ist bevorzugt, dass das in Fig. 5 dargestellte Antriebstelegramm AT ein Summentelegramm ist und entsprechende Telegrammbereiche für eine Vielzahl von weiteren Teilnehmern aufweist. Im Master-Datentelegramm MDT sind beispielsweise Sollwerte für von den Nebenstationen anzusteuernde Aktoren enthalten. Das Antriebstelegramm AT beinhaltet z.B. entsprechende Istwerte zur Rückmeldung an den Zentralteilnehmer. Die Synchronisationsinformation wird gemäß dem vorliegenden Ausführungsbeispiel der Erfindung nicht durch ein eigenes Master-Synchronisationstelegramm MST (vgl. Fig. 4) gebildet, sondern die Synchronisationsinformation ist ein Datenfeld MST in dem Master-Datentelegramm MDT. Der genaue Aufbau des Master-Datentelegramms MDT wird weiter unten unter Bezugnahme auf Fig. 6 näher erläutert. Es sei an dieser Stelle bereits bemerkt, dass das Master-Synchronisations-Informationsfeld MST am Anfang bzw. in einem vorderen Abschnitt des Master-Datentelegramms MDT hinter einem Header HDR eingebettet ist. Das Antriebstelegramm AT besitzt zur einfacheren Implementierung des erfindungsgemäßen Kommunikationssystems in Hardware und Software dieselbe Struktur wie das Master-Datentelegramm MDT, wobei aber in der Regel vom Antriebstelegramm keine Synchronisationsinformation an die Hauptstation übertragen wird. Dies ist deshalb vorteilhaft, da dann beide Arten von Telegrammen, nämlich MDT und AT im Hinblick auf die eigentlichen Daten, wie z.B. Soll- und Istwerte, den gleichen Offset besitzen. Der Teil der Kommunikation welcher das Master-Datentelegramm sowie wenigstens ein Antriebstelegramm umfasst, wird in Fig. 5 als RT-Kanal bezeichnet. Optional kann neben diesem RT-Kanal auch ein IP-Kanal im Kommunikationszyklus enthalten sein. Bei dem IP-Kanal handelt es sich dabei um einen Zeitschlitz zur Übertragung von gemäß dem Internetprotokoll kodierten Daten. Die Dauer des Kommunikationszyklus ist in Fig. 5 ebenfalls angezeigt. Entsprechend der Dauer des Kommunikationszyklus beim SERCOS interface® (vgl. Fig. 4), bei welchem diese vom Ende eines Master-Synchronisationstelegramms zum Ende des nächsten darauffolgenden Master-Synchronisationstelegramms definiert wird, ist der Kommunikationszyklus bei dem Kommunikationssystem der vorliegenden Erfindung als der Abstand vom Ende des Master-Synchronisationsinformationsfeldes eines Master-Datentelegramms zu dem Ende des Master-Synchronisationsinformationsfeldes eines darauffolgenden Master-Datentelegramms definiert. Der nächste Kommunikationszyklus beginnt daher mit dem dem Master-Synchronisationsinformationsfeld folgenden Anteil des Master-Datentelegramms, wie durch den punktierten Pfeil, welcher den darauf folgenden RT-Kanal des nächsten Zyklus schematisch andeutet.

In Fig. 6 ist schematisch der Aufbau des Master-Datentelegramms in weiterer Einzelheit dargestellt. Vor Beginn des eigentlichen Master-Datentelegramms ist eine Leerlaufphase ("IDLE") vorgesehen, welche mindestens 12 Byte lang ist. Das Master-Datentelegramm beginnt mit einem 1 Byte großem Datenfeld, welches als SSD ("Start Stream Delimiter") bezeichnet ist. Hierbei handelt es sich um ein Präfix, welches den Anfang eines übertragenen Datenstroms begrenzt. Darauf folgt, eine Präambel (auf Englisch: "preamble") der Länge von 6 Byte, wobei eine Funktion der Präambel darin bestehen kann, der Hardware der Elektronik in dem erfindungsgemäßen Kommunikationssystem eine Start-up-Zeit zur Verfügung zu stellen, um zu erkennen, dass ein Telegramm übertragen wird. Daran schließt sich ein Datenfeld SFD ("Start Frame Delimiter") an, welches den Anfang des eigentlichen Telegramms oder Frames abgrenzt. Das SFD-Feld ist ein 1 Byte lang. Darauffolgend sind im Master-Datentelegramm die Zieladresse ("destination address") und die Quelladresse ("source address") für das Telegramm angegeben, wobei jedes der beiden Datenfelder jeweils eine Länge von 6 Byte besitzt. Darauf folgt ein 2 Byte langes Typenfeld, welches dazu verwendet wird, zu identifizieren, welcher Typ von Netzwerkprotokoll in dem darauf folgenden Datenfeld verwendet wird. Darauf folgt das eigentliche Datenfeld, welches in seiner Länge nicht genau spezifiziert ist. Beispielsweise bei Ethernet kann die Länge des Datenfelds bis zu 1.500 Byte betragen. In der Regel wird die Länge des Datenfelds davon abhängen, wie viele und welche Daten in dem Telegramm übertragen werden. Im Anschluss an das Datenfeld ist eine 4 Bit lange Prüfsumme FCS ("Frame Check Sequence") vorgesehen. Das FCS-Feld enthält somit eine Prüfsumme, welches eine Überprüfung der Integrität der Daten in dem gesamten Telegramm gestattet. Den Abschluss der übertragenden Daten bildet das 1 Byte lange Feld ESD ("End Stream Delimiter"), welches ein Suffix und das Ende des übertragenen Datenstroms darstellt.

Das Master-Synchronisationsinformationsfeld bildet einen Teil des Datenfelds des erfindungsgemäßen Telegramms und ist genauer am Anfang des Datenfeldes in dieses eingebettet. Das Master-Synchronisationsinformationsfeld ist in seiner Länge konstant und weist ein Anfangsfeld der Länge von einem Byte auf, in welchem der Telegrammtyp spezifiziert ist. In diesem Feld wird insbesondere spezifiziert, ob es sich bei dem vorliegenden Telegramm um ein Master-Datentelegramm MDT oder ein Antriebstelegramm AT handelt. Wie bereits oben erläutert wurde ist die Synchronisationsinformation grundsätzlich nur für ein Master-Datentelegramm erforderlich, da sich die Nebenstationen auf den Zentralteilnehmer (= Master) synchronisieren sollen. Aus Gründen der einfacheren Implementierung in Hard- und Software ist jedoch bevorzugt, dass die Antriebstelegramme denselben Aufbau wie das Master-Datentelegramm besitzen, so dass auch ein Antriebstelegramm das Master-Synchronisationsinformationsfeld aufweisen kann. Für diesen Fall ist das Feld "Telegrammtyp" daher mit der entsprechenden Information der Nebenstation zu besetzen. Die eigentliche Synchronisationsinformation wird in einem darauf folgenden Feld ("Phase") der Länge von einem Byte übertragen. Den Abschluss des Master-Synchronisationsinformationsfeld bildet ein CRC-Feld (="Cyclic Redundancy Check"), welches mittels zyklischer Redundanzprüfung zur Überprüfung der Integrität der Daten vom Anfang des Datenstroms, d.h. von dem SSD-Feld bis zum Phasenfeld des Master-Synchronisationsinformationsfeld, dient. Die CRC-Prüfsumme ist eine eindeutige Zahl, die erzeugt wird, indem man ein Polynom auf das Bitmuster, welches vom SSD-Feld bis zum Phasenfeld enthalten ist, anwendet. Das gleiche Polynom wird an der Empfangsstation des Datentelegramms verwendet, um eine weitere Prüfsumme zu erzeugen. Die beiden Prüfsummen werden dann verglichen, um festzustellen, ob die übertragenen Daten korrumpiert bzw. verfälscht sind. Aus der Darstellung der Fig. 6 ergibt sich, dass das Ende des CRC-Feldes einen konstanten zeitlichen Abstand von dem Anfang (Anfang des SSD-Feldes) des Master-Datentelegramms besitzt. Dieser konstante zeitliche Abstand beträgt vorzugsweise etwa zwei Mikrosekunden und ist im gezeigten Ausführungsbeispiel 2,24 Mikrosekunden.

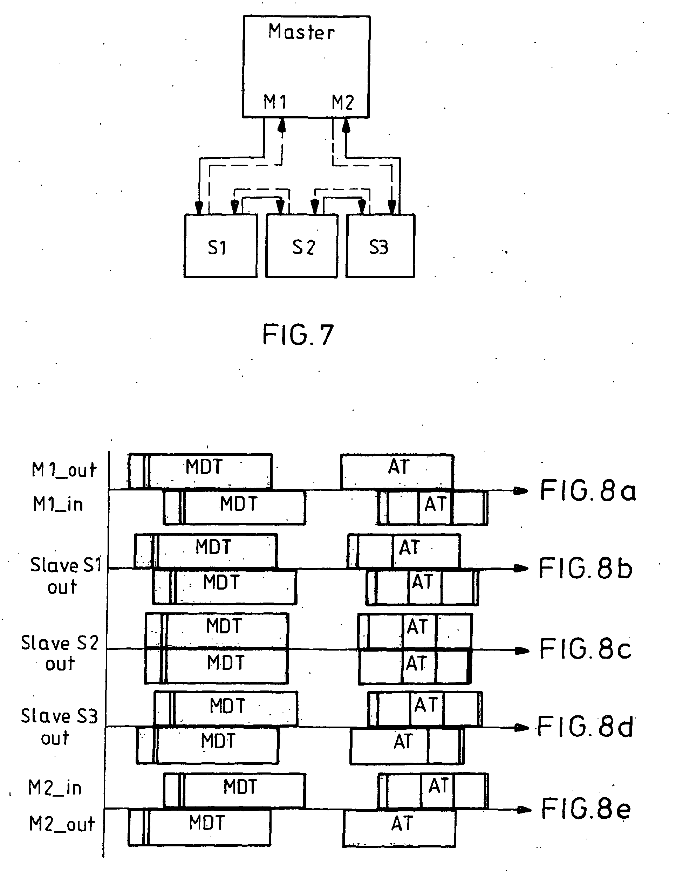

In Fig. 7 ist ein redundantes Kommunikationssystem gezeigt, wie es beispielsweise in Verbindung mit der vorliegenden Erfindung verwendet wird. Dargestellt ist ein gegenläufiger Doppelring mit zwei aktiven Ringen, wobei die Kommunikation auf beiden Ringen gleichzeitig stattfindet. Die Erfindung ist aber auf die dargestellte Struktur nicht beschränkt. Weitere Ausführungsbeispiele der redundanten Kommunikation können unterschiedliche Kommunikationssystem und auch andere Topologien, z.B. redundante Linienstrukturen, sein. Das gezeigte Kommunikationssystem weist zwei Zentralteilnehmer M1 und M2 sowie drei weitere Teilnehmer S1, S2 und S3 auf. Der gemäß der Darstellung der Fig. 7 im Gegenuhrzeigersinn verlaufende Ring wird mit Ring 1 bezeichnet, während der weitere im Uhrzeigersinn verlaufende Ring mit Ring 2 bezeichnet ist. Der Ring 1 verläuft dabei vom Zentralteilnehmer M1 zu einem Eingang des Teilnehmers S1. Der weitere Verlauf des Rings 1 ist dann von einem Ausgang des Teilnehmers S 1 zu einem Eingang des Teilnehmers S2. Weiter verläuft der Ring 1 von einem Ausgang des Teilnehmers S2 zu einem Eingang des Teilnehmers S3 und von einem Ausgang des Teilnehmers S3 zum zweiten Zentralteilnehmer M1. Selbstverständlich sind auch die beiden Zentralteilnehmer M1 und M2 miteinander verbunden. Entsprechend verläuft der Ring 2 von einem Ausgang des Zentralteilnehmers M2 zu einem Eingang des Teilnehmers S3, von einem Ausgang des Teilnehmers S3 zu einem Eingang des Teilnehmers S2, von einem Ausgang des Teilnehmers S2 zu einem Eingang des Teilnehmers S 1 und von einem Ausgang des Teilnehmers S1 zu einem Eingang des weiteren Zentralteilnehmers M1. Die beiden Ringe, d.h. Ring 1 und Ring 2, werden vorteilhafterweise nicht unabhängig voneinander betrieben. Um im Fehlerfall eine gesicherte Kanalkapazität für die Echtzeitanforderungen zu besitzen, wird auf den beiden Ringen dieselbe Information gleichzeitig ausgetauscht, damit durch das gleichzeitige Senden auf beiden Ringen durch die höhere Redundanz eine bessere Fehlertoleranz gegenüber Datenblockausfällen erreicht werden kann.

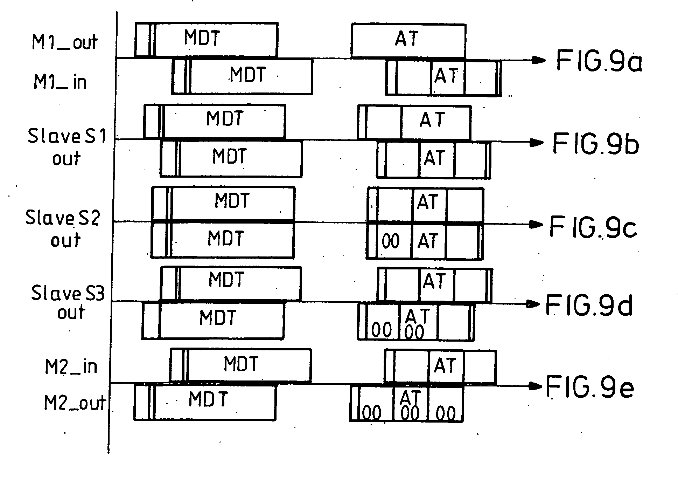

Den Fig. 8a bis 8e kann man die Telegrammübertragung auf den beiden Ringen gemäß Fig. 7 entnehmen. Hierbei ist in jeweils der oberen Hälfte der Fig. 8a bis 8e der Verkehr auf dem Ring 1 und in der unteren Hälfte der Fig. 8a bis 8e der Verkehr auf den Ring 2 an den entsprechenden Schnittstellen gezeigt. Die obere Hälfte der Fig. 8a zeigt daher den Ausgang des Zentralteilnehmers M1, welcher einen Bestandteil des Rings 1 bildet. Die untere Hälfte der Fig. 8a zeigt den Eingang des Zentralteilnehmers M1, welcher einen Bestandteil des Rings 2 bildet. Entsprechend zeigt die obere Hälfte der Fig. 8b einen Ausgang des weiteren Teilnehmers S1, welcher einen Bestandteil des Rings 1 bildet. Die untere Hälfte der Fig. 8b zeigt einen weiteren Ausgang des Teilnehmers S1, welcher einen Bestandteil des Rings 2 bildet. Entsprechend zeigt die obere Hälfte der Fig. 8c einen Ausgang des Teilnehmers S2, welcher einen Bestandteil des Rings 1 bildet. Die untere Hälfte der Fig. 8c zeigt einen weiteren Ausgang des Teilnehmers S2, welcher einen Bestandteil des Rings 2 bildet. Entsprechend zeigt die obere Hälfte der Fig. 8d einen Ausgang des Teilnehmers S3, welcher einen Bestandteil des Rings 1 bildet. Die untere Hälfte der Fig. 8d zeigt einen weiteren Ausgang des Teilnehmers S3, welcher einen Bestandteil des Rings 2 bildet. In Fig. 8e ist in der oberen Hälfte der Eingang des Zentralteilnehmers M2 dargestellt, der einen Bestandteil des Rings 1 bildet. In der unteren Hälfte der Fig. 8e ist der Ausgang des Teilnehmers M2 dargestellt, welcher einen Bestandteil des Rings 2 bildet. Die in Fig. 8a bis 8e dargestellten Telegramme, gezeigt ist ein Master-Datentelegramm MDT und ein Antriebstelegramm AT, welche beide als Summentelegramme ausgebildet sind, entsprechen den zuvor bereits in Verbindung mit Fig. 5 und 6 beschriebenen Ausführungsbeispielen. Man entnimmt einem Vergleich der Fig. 8a bis 8e deutlich, dass die Übertragung der Telegramme entlang dem Ring zu einer entsprechenden zeitlichen Verzögerung führt. Grundsätzlich erreichen die Telegramme die einzelnen Teilnehmer des in Fig. 7 gezeigten Kommunikationssystems zu unterschiedlichen Zeitpunkten. Dies gilt insbesondere für die in den Fig. 8a, 8b, 8d und 8e gezeigten Teilnehmer M1, S1, S3 und M2. Aufgrund der Symmetrie der Anordnung treffen bei dem Teilnehmer S2 (vgl. Fig. 8c) die entsprechenden Telegramme gleichzeitig ein. Insbesondere der rechten Hälfte der Fig. 8a bis 8e, welche das als Summentelegramm ausgebildete Antriebstelegramm zeigt, entnimmt man deutlich, dass für die drei weiteren Teilnehmer S1, S2 und S3 jeweils ein vorderer, mittlerer und hinterer Abschnitt des Antriebstelegramms vorgesehen ist. Bei einem jeweiligen Durchlauf durch den Teilnehmer S1, S2 oder S3 wird der entsprechende Abschnitt mit Daten, beispielsweise Istwertdaten, des jeweiligen Teilnehmers aufgefüllt. In dem vorliegenden Ausführungsbeispiel wird die Synchronisationsinformation nicht wie beim Stand der Technik (vgl. Fig. 4) mittels eigener Master-Synchronisationstelegramme übertragen. Stattdessen wird gemäß dem vorliegenden Ausführungsbeispiel der vorliegenden Erfindung (vgl. Fig. 5 und 6) die Synchronisationsinformation eingebettet in das Master-Datentelegramm übertragen, wodurch sich eine erhöhte Protokolleffizienz ergibt. Die Erfindung ist jedoch hierauf nicht beschränkt und kann auch mit eigenen Master-Synchronisierungstelegrammen MST (vgl. Fig. 4) verwendet werden. Man entnimmt der Darstellung der linken Hälfte der Fig. 8a bis 8e deutlich, dass die Synchronisationsinformation, d.h. das Datenfeld MST des Master-Datentelegramms MDT, an den jeweiligen weiteren Teilnehmers S1, S2 und S3 zu unterschiedlichen Zeiten ankommt. Wie bereits oben bemerkt, empfängt aus Symmetriegründen lediglich der Teilnehmer S2 die Synchronisationsinformation aus beiden Ringen gleichzeitig. Durch die vorliegende Erfindung wird nun die redundant vorhandene Synchronisationsinformation, die bei jedem Teilnehmer im fehlerfreien Fall doppelt ankommt, zur Synchronisation verwendet. Die unterschiedlichen Laufzeiten sind zwar von weiteren Teilnehmern zu weiteren Teilnehmern unterschiedlich, sind aber dem weiteren Teilnehmer bekannt und können daher kompensiert werden. Wie aus den zu unterschiedlichen Zeiten bei den weiteren Teilnehmern empfangenen Synchronisationsinformationen eine eindeutige Vorschrift zur Synchronisationstriggerung gebildet wird, wird im Folgenden unter Bezugnahme auf Fig. 9 näher erläutert.

Anhand der Fig. 9a bis 9e wird im Folgenden die Erfindung in weiterer Einzelheit näher erläutert. Dabei entsprechen die Fig. 9a bis 9e im Wesentlichen den Fig. 8a bis 8e, so dass diesbezüglich auf die obige Beschreibung verwiesen wird. Im Unterschied zu den Fig. 8a bis 8e sind in dem Antriebstelegramm AT die den einzelnen weiteren Teilnehmern S1, S2, S3 zugehörigen Telegrammfelder markiert. Dabei ist in der Darstellung der Fig. 9a bis 9e nur in der unteren Hälfte (was dem Ring 2 entspricht) die entsprechende Vorbesetzung der Telegrammbereiche für die einzelnen weiteren Teilnehmer durch den Zentralteilnehmer M2 aus Gründen der Vereinfachung der Darstellung angezeigt. Selbstverständlich kann (obwohl nicht dargestellt) entsprechend mit dem, in der oberen Hälfte der Fig. 9a bis 9e dargestellten Antriebstelegramm AT des Rings 1 verfahren werden. Man entnimmt daher der unteren Hälfte der Fig. 9e bis 9c deutlich, dass das Antriebstelegramm, wenn es den Zentralteilnehmer M2 verlässt, am Anfang des für den jeweiligen weiteren Teilnehmer vorgesehenen Telegrammbereichs einen vorbestimmten Eintrag im jeweiligen Zentralteilnehmer gesetzt bekommt. Gemäß der Darstellung besteht der vorgesetzte Eintrag aus zwei führenden Nullen "00". Sobald das Antriebstelegramm die jeweiligen weiteren Teilnehmer S1, S2 oder S3 verlässt bzw. durchlaufen hat, hat der weitere Teilnehmer S1, S2, S3 seine Daten, z.B. von Aktoren oder Sensoren aufgenommene Istwertdaten, in den jeweiligen Telegrammbereich des als Summentelegramm ausgebildeten Antriebstelegramms AT geschrieben. Hierbei wird der vorbestimmte Eintrag "00" in jedem Fall vorzugsweise von der Adresse des weiteren Teilnehmers überschrieben. Dies gilt selbst dann, wenn keine Daten in das Antriebstelegramm einzuspeisen sind, weil keine entsprechenden Sensor- bzw. Aktor-Istwerte vorliegen. Nach dem Empfang des durch den Ring durchgelaufenen Antriebstelegramm bei den weiteren Zentralteilnehmer M1 kann der jeweilige Zentralteilnehmer erkennen, ob einer der weiteren Teilnehmer S1, S2 oder S3 ausgefallen ist. Das Verfahren zum Überschreiben der vom Zentralteilnehmer vorgesetzten Daten wird seitens des weiteren Teilnehmers durch einen Kommunikationscontroller durchgeführt, der die einzuspeisenden Daten aus einem Speicherbereich, welcher vorher von einem Prozessor des weiteren Teilnehmers bzw. der Slave-Funktionalität gesetzt worden ist, herausliest und in das Antriebstelegramm an einer der entsprechenden Position einspeist. Der weitere Teilnehmer fügt dabei sein Adressfeld als letztes Datum in den Speicherbereich ein, nachdem er seine Istwerte in den Speicherbereich kopiert hat. Das Adressfeld oder allgemein ein Feld mit einer "Gültigkeitsanzeige" liegt am Anfang des einzuspeisenden Telegrammbereichs. Hierdurch kann sichergestellt werden, dass die in das Antriebstelegramm eingespeisten Daten konsistent sind, auch wenn der weitere Teilnehmer seine Daten unsynchronisiert zu der Telegrammverarbeitung in den Speicherbereich kopiert. Nur das Adressfeld muss in einem einzigen Speicherzugriff (konsistent) kopiert werden. Durch die Gegenläufigkeit von dem Einkopieren in den Speicherbereich durch den Prozessor des weiteren Teilnehmers bzw. von dem Auslesen der Daten aus dem Speicherbereich durch den Kommunikationscontroller ist eine Konsistenz der Daten gewährleistet.

Die Erfindung wurde vorstehend anhand von bevorzugten Ausführungsformen derselben näher erläutert. Für einen Fachmann ist es jedoch offensichtlich, dass unterschiedliche Abwandlungen und Modifikationen gemacht werden können, ohne von dem der Erfindung zugrundeliegenden Gegenstand abzuweichen.

## Patentansprüche

1. Verfahren zur Übertragung von Daten in einem Kommunikationssystem, welches einen Zentralteilnehmer (M;M1,M2) und wenigstens einen weiteren Teilnehmer (S1,S2,S3) aufweist, wobei von dem wenigstens einen weiteren Teilnehmer (S1,S2,S3) zu dem Zentralteilnehmer (M;M1,M2) Daten mittels Telegrammen (AT) übertragen werden, wobei die Telegramme (AT) vor der Aussendung durch den wenigstens einen weiteren Teilnehmer (S1,S2,S3) vom Zentralteilnehmer (M;M1,M2) an den wenigstens einen weiteren Teilnehmer (S1,S2,S3) übertragen wurden, wobei in den Telegrammen (AT) an wenigstens einer dem wenigstens einen weiteren Teilnehmer (S1,S2,S3) zugeordneten Stelle vom Zentralteilnehmer (M;M1,M2) ein vorbestimmter Eintrag gesetzt wird, und wobei der wenigstens eine weitere Teilnehmer (S1,S2,S3) seine an den Zentralteilnehmer (M;M1,M2) zu übertragenden Daten derart in das Telegramm (AT) einspeist, dass der vom Zentralteilnehmer (M;M1,M2) gesetzte Eintrag zumindest teilweise überschrieben wird, **dadurch gekennzeichnet, dass** die von dem wenigstens einen Teilnehmer (S1,S2,S3) einzuspeisenden Daten ein vorbestimmtes Datum aufweisen und dass das vorbestimmte Datum im vordersten Übertragungswort in dem für den wenigstens einen weiteren. Teilnehmer (S1,S2,S3) vorgesehenen Datenfeld des Telegramms (AT) ist.

2. Verfahren nach Anspruch 1, **dadurch gekennzeichnet, dass** der wenigstens eine weitere Teilnehmer (S1,S2,S3) nach jedem Empfang des vom Zentralteilnehmer (M;M1,M2) an ihn übertragenen Telegramms (AT) Daten in das Telegramm (AT) einspeist, welche von dem vorbestimmten Eintrag verschieden sind.

3. Verfahren nach einem der Ansprüche 1 bis 2, **dadurch gekennzeichnet, dass** die von dem wenigstens einen Teilnehmer (S1,S2,S3) einzuspeisenden Daten für jeden Teilnehmer ein eindeutiges Identifizierungsdatum für den weiteren Teilnehmer (S1,S2,S3) aufweisen.

4. Verfahren nach Anspruch 3, **dadurch gekennzeichnet, dass** das Identifizierungsdatum die Adresse des weiteren Teilnehmers (S1,S2,S3) in dem Kommunikationssystem aufweist.

5. Verfahren nach einem der Ansprüche 2 bis 4, **dadurch gekennzeichnet, dass** das vorbestimmte Datum und/oder das Identifizierungsdatum und/oder die Adresse des weiteren Teilnehmers (S1,S2,S3) an die Stelle(n) des vom Zentralteilnehmer (M;M1,M2) gesetzten Eintrags geschrieben wird.

6. Verfahren nach einem der Ansprüche 1 bis 5, **dadurch gekennzeichnet, dass** der vorbestimmte Eintrag eine vorgegebene Anzahl von Nullen aufweist.

7. Verfahren nach einem der Ansprüche 1 bis 6, **dadurch gekennzeichnet, dass** die Telegramme (AT) Antriebstelegramme sind, welche von Sensoren und/oder Aktoren ermittelte Ist-Werte aufweisen.

8. Verfahren nach einem der Ansprüche 1 bis 7, **dadurch gekennzeichnet, dass** die Telegramme (AT) Summentelegramme sind, welche für jeden der weiteren Teilnehmer (S1,S2,S3) des Kommunikationssystems vorbestimmte verschiedene Telegrammfelder aufweisen.

9. Verfahren nach einem der Ansprüche 1 bis 8, **dadurch gekennzeichnet, dass** zur Auswertung und/oder Bearbeitung eines von einem weiteren Teilnehmer (S1,S2,S3) übertragenen Telegramminhalts im Zentralteilnehmer (M;M1,M2) oder in einem anderen der weiteren Teilnehmer (S1,S2,S3) überprüft wird, ob der vorbestimmte Eintrag zumindest teilweise überschrieben wurde.

10. Verfahren nach einem der Ansprüche 1 bis 9, **dadurch gekennzeichnet, dass** das vorbestimmte Datum und/oder das Identifizierungsdatum des wenigstens einen weiteren Teilnehmers (S1,S2,S3) der vorderste Eintrag in dem für den wenigstens einen weiteren Teilnehmer (S1,S2,S3) vorgesehenen Datenfeld des Telegramms (AT) ist.

11. Verfahren nach einem der Ansprüche 1 bis 10, **dadurch gekennzeichnet, dass** das Identifizierungsdatum des wenigstens einen weiteren Teilnehmers (S1,S2,S3) im vordersten Übertragungswort in dem für den wenigstens einen weiteren Teilnehmer (S1,S2,S3) vorgesehenen Datenfeld des Telegramms (AT) ist.

12. Verfahren nach Anspruch 10 oder 11, **dadurch gekennzeichnet, dass** der vorderste Eintrag als letzter in das Telegramm (AT) eingespeist wird.

13. Verfahren nach einem der Ansprüche 1 bis 12, **dadurch gekennzeichnet, dass** das für den wenigstens einen weiteren Teilnehmer (S1,S2,S3) vorgesehene Datenfeld des Telegramms (AT) von dem wenigstens einen weiteren Teilnehmer (S1,S2,S3) von hinten nach vorne mit Daten gefüllt wird.

14. Verfahren nach einem der Ansprüche 1 bis 13, **dadurch gekennzeichnet, dass** der wenigstens eine weitere Teilnehmer (S1,S2,S3) seine an den Zentralteilnehmer (M;M1,M2) zu übertragenen Daten in einen Speicherbereich eingeschrieben hat, wobei der wenigstens eine weitere Teilnehmer (S1,S2,S3) als letzten Eintrag in den Speicherbereich das vorbestimmte Datum und/oder das Identifizierungsdatum eingeschrieben hat, und die Daten in umgekehrter Reihenfolge zum Einschreiben der Daten in den Speicherbereich aus dem Speicherbereich in das Telegramm (AT) eingespeist werden.

15. Verfahren nach einem der vorhergehenden Ansprüche, **dadurch gekennzeichnet, dass** die Telegramme Ethernet-Telegramme sind.

16. Kommunikationssystem mit Mitteln zur Durchführung aller Schritte eines Verfahrens nach einem der Ansprüche 1 bis 15.

17. Kommunikationssystem nach Anspruch 16, **dadurch gekennzeichnet, dass** das Kommunikationssystem ein verteiltes Kommunikationssystem zur dezentralen Steuerung mit einer Master-Slave-Struktur ist.

18. Kommunikationssystem nach einem der Ansprüche 16 bis 17, **dadurch gekennzeichnet, dass** das Kommunikationssystem in einer Ringstruktur und/oder einer linearen Busstruktur und/oder einer Sternstruktur angeordnet ist.

19. Kommunikationssystem nach Anspruch 18, **dadurch gekennzeichnet, dass** das Kommunikationssystem eine Ringstruktur mit getrennten Soll- und Istwerttelegrammen aufweist.

20. Kommunikationssystem nach einem der Ansprüche 17 bis 19, **dadurch gekennzeichnet, dass** das Kommunikationssystem auf Ethernet-Physik basiert.

21. Automatisierungssystem mit einem Kommunikationssystem gemäß einem der Ansprüche 17 bis 20, wobei das Automatisierungssystem eine Steuereinheit sowie wenigstens eine Antriebseinheit oder Ein-/Ausgabeeinheit aufweist, und wobei die Steuereinheit mit dem Zentralteilnehmer und jeweils eine der wenigstens einen Antriebseinheit oder Ein-/Ausgabeeinheit mit einem der wenigstens einen weiteren Teilnehmer verbunden ist.

## Claims

1. Method for' transmitting data in a communication system which has a central subscriber (M; M1, M2) and at least one further subscriber (S1, S2, S3), where the at least one further subscriber (S1, S2, S3) transmits data to the central subscriber (M; M1, M2) by means of messages (AT), where the messages (AT), before being sent by the at least one further subscriber (S1, S2, S3), have been transmitted from the central subscriber (M; M1, M2) to the at least one further subscriber (S1, S2, S3), where the central subscriber (M; M1, M2) sets a predetermined entry in the messages (AT) at at least one location associated with the at least one further subscriber (S1, S2, S3), and where the at least one further subscriber (S1, S2, S3) feeds its data which are to be transmitted to the central subscriber (M; M1, M2) into the message (AT) such that the entry which has been set by the central subscriber (M; M1, M2) is at least partially overwritten, **characterized in that** the data to be fed in by the at least one subscriber (S1, S2, S3) have a predetermined data item, and **in that** the predetermined data item is in the foremost transmitted word in the data field provided for the at least one further subscriber (S1, S2, S3) in the message (AT).

2. Method according to Claim 1, **characterized in that** the at least one further subscriber (S1, S2, S3) feeds different data from the predetermined entry into the message (AT) whenever the message (AT) transmitted to it from the central subscriber (M; M1, M2) has been received.

3. Method according to one of Claims 1 to 2, **characterized in that** the data to be fed in by the at least one subscriber (S1, S2, S3) have an explicit identification data item for the further subscriber (S1, S2, S3) for each subscriber.

4. Method according to Claim 3, **characterized in that** the identification data item has the address of the further subscriber (S1, S2, S3) in the communication system.

5. Method according to one of Claims 2 to 4, **characterized in that** the predetermined data item and/or the identification data item and/or the address of the further subscriber (S1, S2, S3) is written to the location(s) of the entry which has been set by the central subscriber (M; M1, M2).

6. Method according to one of Claims 1 to 5, **characterized in that** the predetermined entry has a prescribed number of zeros.

7. Method according to one of Claims 1 to 6, **characterized in that** the messages (AT) are drive messages which have actual values ascertained by sensors and/or actuators.

8. Method according to one of Claims 1 to 7, **characterized in that** the messages (AT) are total messages which have predetermined different message fields for each of the further subscribers (S1, S2, S3) in the communication system.

9. Method according to one of Claims 1 to 8, **characterized in that** a message content transmitted from a further subscriber (S1, S2, S3) is evaluated and/or edited by virtue of the central subscriber (M; M1, M2) or another of the further subscribers (S1, S2, S3) checking whether the predetermined entry has been at least partially overwritten.

10. Method according to one of Claims 1 to 9, **characterized in that** the predetermined data item and/or the identification data item for the at least one further subscriber (S1, S2, S3) is the foremost entry in the data field provided for the at least one further subscriber (S1, S2, S3) in the message (AT).

11. Method according to one of Claims 1 to 10, **characterized in that** the identification data item for the at least one further subscriber (S1, S2, S3) is in the foremost transmitted word in the data field provided.for the at least one further subscriber (S1, S2, S3) in the message (AT).

12. Method according to Claim 10 or 11, **characterized in that** the foremost entry is fed into the message (AT) last.

13. Method according to one of Claims 1 to 12, **characterized in that** the data field provided for the at least one further subscriber (S1, S2, S3) in the message (AT) is filled with data from back to front by the at least one further subscriber (S1, S2, S3).

14. Method according to one of Claims 1 to 13, **characterized in that** the at least one further subscriber (S1, S2, S3) has written its data to be transmitted to the central subscriber (M; M1, M2) to a memory area, where the at least one further subscriber (S1, S2, S3) has written the predetermined data item and/or the identification data item to the memory area as the last entry, and the data are fed into the message (AT) from the memory area in the opposite order from writing the data to the memory area.

15. Method according to one of the preceding claims, **characterized in that** the messages are Ethernet messages.

16. Communication system having means for carrying out all the steps of a method according to one of Claims 1 to 15.

17. Communication system according to Claim 16, **characterized in that** the communication system is a distributed communication system for local control with a master/slave structure.

18. Communication system according to one of Claims 16 to 17, **characterized in that** the communication system is arranged in a ring structure and/or a linear bus structure and/or a star structure.

19. Communication system according to Claim 18, **characterized in that** the communication system has a ring structure with separate nominal and actual value messages.

20. Communication system according to one of Claims 17 to 19, **characterized in that** the communication system is based on Ethernet physics.

21. Automation system having a communication system according to one of Claims 17 to 20, where the automation system has a control unit and also at least one drive unit or input/output unit, and where the control unit is connected to the central subscriber and a respective one of the at least one drive unit or input/output unit is connected to one of the at least one further subscribers.

## Revendications

1. Procédé de transmission de données dans un système de communication comportant au moins un participant central (M ;M1,M2) et au moins un autre participant (S1,S2,S3), et au moins cet autre participant (S1,S2,S3) transmet vers le participant central (M;M1,M2) des données par des télégrammes (AT),
les télégrammes (AT) étant transmis avant l'émission par au moins un autre participant (S1,S2,S3), du participant central (M;M1,M2) vers au moins un autre participant (S1,S2,S3),
et dans les télégrammes (AT), à au moins un endroit associé à au moins un autre participant (S1,S2,S3), le participant central (M;M1,M2) fixe un enregistrement prédéterminé et
au moins un autre participant (S1,S2,S3) injecte ses données à transmettre vers le participant central (M;M1,M2) dans le télégramme (AT) pour remplacer partiellement l'enregistrement fixé par le participant central (M;M1;M2),
**caractérisé en ce que**
les données à injecter par au moins un participant (S1,S2,S3) ont une date prédéfinie et
la date prédéfinie est dans le mode de transmission le plus à l'avant dans le champ de données du télégramme (AT) prévu pour au moins un autre participant (S1,S2,S3).

2. Procédé selon la revendication 1,
**caractérisé en ce qu'**
au moins un autre participant (S1,S2,S3), après chaque réception du télégramme (AT) que lui transmet le participant central (M;M1,M2) est injecté dans le télégramme (AT) différent de l'enregistrement déterminé.

3. Procédé selon l'une des revendications 1 et 2,
**caractérisé en ce que**
pour chaque participant les données à injecter par au moins un participant (S1,S2,S3) ont une date d'identification univoque pour l'autre participant (S1,S2,S3).

4. Procédé selon la revendication 3,
**caractérisé en ce que**
la donnée d'identification présente l'adresse de l'autre participant (S1,S2,S3) dans le système de communication.

5. Procédé selon l'une des revendications 2 à 4,
**caractérisé en ce que**
la donnée prédéfinie et/ou la donnée d'identification et/ou l'adresse de l'autre participant (S1,S2,S3) est écrite à l'endroit (aux endroits) de l'enregistrement fixé par le participant central (M;M1,M2).

6. Procédé selon l'une des revendications 1 à 5,
**caractérisé en ce que**
l'enregistrement prédéfini comporte un nombre prédéfini de zéro.

7. Procédé selon l'une des revendications 1 à 6,
**caractérisé en ce que**
les télégrammes (AT) sont des télégrammes d'entraînement ayant les valeurs réelles fournies par des capteurs et/ou des actionneurs.

8. Procédé selon l'une des revendications 1 à 7,
**caractérisé en ce que**
les télégrammes (AT) sont des télégrammes de sommes qui ont différents champs de télégramme prédéfinis pour chaque autre participant (S1,S2,S3) du système de communication.

9. Procédé selon l'une des revendications 1 à 8,
**caractérisé en ce que**
pour exploiter et/ou pour traiter le contenu d'un télégramme transmis par un autre participant (S1,S2,S3) dans le participant central (M ;M1, M2) ou dans un autre participant (S1,S2,S3), on vérifie si l'enregistrement prédéfini a au moins été partiellement remplacé par une écriture (surscription).

10. Procédé selon l'une des revendications 1 à 9,
**caractérisé en ce que**
la donnée prédéfinie et/ou la donnée d'identification d'au moins un autre participant (S1,S2,S3) est l'enregistrement le plus à l'avant dans le champ de données du télégramme (AT) prévu pour au moins un autre participant (S1,S2,S3).

11. Procédé selon l'une des revendications 1 à 10,
**caractérisé en ce que**
la donnée d'identification d'au moins un autre participant (S1,S2,S3) est prévue dans le mode de transmission le plus à l'avant dans lequel il y a le champ de données du télégramme (AT) pour au moins un autre participant (S1,S2,S3).

12. Procédé selon la revendication 10 ou 11,
**caractérisé en ce que**
l'enregistrement le plus à l'avant est introduit le dernier dans le télégramme (AT).

13. Procédé selon l'une des revendications 1 à 12,
**caractérisé en ce que**
le champ de données du télégramme (AT) prévu pour au moins un autre participant (S1,S2,S3) est rempli de données de l'arrière vers l'avant, par au moins un autre participant (S1,S2,S3).

14. Procédé selon l'une des revendications 1 à 13,
**caractérisé en ce qu'**
au moins un autre participant (S1,S2,S3) inscrit les données à transmettre vers le participant central (M;M1,M2) dans une zone de mémoire et au moins un autre participant (S1,S2,S3) inscrit comme dernier enregistrement dans la zone de mémoire, la donnée prédéfinie et/ou la donnée d'identification et
les données sont alimentées dans l'ordre inverse de leur inscription dans la zone de mémoire à partir de celle-ci dans le télégramme (AT).

15. Procédé selon l'une des revendications précédentes,
**caractérisé en ce que**
les télégrammes sont des télégrammes du système Ethernet.

16. Système de communication comportant des moyens pour mettre en oeuvre toutes les étapes d'un procédé selon l'une des revendications 1 à 15.

17. Système de communication selon la revendication 16,
**caractérisé en ce qu'**
il s'agit d'un système de communication réparti pour la commande décentralisée avec une structure maître-esclave.

18. Système de communication selon l'une des revendications 16 à 17,
**caractérisé en ce qu'**
il est sous la forme d'une structure en anneau et/ou d'une structure de bus linéaire et/ou d'une structure en étoile.

19. Système de communication selon la revendication 18,
**caractérisé en ce qu'**
il a une structure en anneau avec des télégrammes séparés pour les valeurs de consigne et les valeurs réelles.

20. Système de communication selon l'une des revendications 17 à 19,
**caractérisé en ce qu'**
il est fondé sur Physique Ethernet.

21. Système d'automatisation comportant un système de communication selon l'une des revendications 17 à 20, le système d'automatisation ayant une unité de commande et au moins une unité d'entraînement ou une unité d'entraînement/sortie et l'unité de commande est reliée au participant central et à chaque fois à l'une au moins d'une unité d'entraînement ou d'une unité d'entrée/sortie pour être reliée à chaque fois à un autre participant.
